# EUROPÄISCHE PATENTSCHRIFT

(11) **EP 2 354 558 B1**
(45) Veröffentlichungstag und Bekanntmachung des Hinweises auf die Patenterteilung: **15.11.2017**
(21) Anmeldenummer: 11151657.1
(22) Anmeldetag: 21.01.2011
(51) Int. Cl.: F04D 25/08, F04D 29/70, F04D 17/16, H02K 9/26, B60H 1/00, H02K 7/14, H02K 9/06, H02K 5/20, H02K 9/28

(54) **Klimaanlage**
Air conditioning device
Installation de climatisation

(30) Priorität: 27.01.2010 DE 102010005944
(43) Veröffentlichungstag der Anmeldung: 10.08.2011
(73) Patentinhaber: MAHLE Behr GmbH & Co. KG, 70469 Stuttgart (DE)
(72) Erfinder: Bouchalat, Karim-Mathieu, 70499, Stuttgart (DE); Sartorius, Dieter, 71665 Vaihingen/Enz (DE); Krämer, Ulrich, 70374, Stuttgart (DE)
(74) Vertreter: Grauel, Andreas

(56) Entgegenhaltungen:
- EP-A2- 1 683 459
- DE-A1- 4 341 105
- DE-U1- 20 212 894
- US-A- 4 399 378
- US-A1- 2004 263 009

## Beschreibung

Die Erfindung betrifft eine Klimaanlage, insbesondere für ein Kraftfahrzeug, gemäß dem Oberbegriff des Anspruchs 1.

Aus dem Stand der Technik bekannte Kraftfahrzeugklimaanlagen sind in der Regel mit einem Gebläse ausgestattet, das von einem Gleichstrommotor angetrieben wird, da dies besonders dann eine kostengünstige Variante ist, wenn ein mit Bürsten arbeitender Motor eingesetzt wird. In dem Luftführungsgehäuse der Klimaanlage sind weiterhin üblicherweise vor oder hinter dem Gebläse bzw. stromaufwärts oder stromabwärts des Gebläses Filter bzw. Filtermaßnahmen vorgesehen. Der Filter vor dem Gebläse verhindert ein Eintreten von Schmutz oder anderen Partikeln in das Klimagerät und insbesondere in das Gebläse, der Filter hinter dem Gebläse verhindert ebenfalls ein Eintreten von Schmutz oder anderen Partikeln in das Klimagerät, ohne hierbei das Gebläse vor Schmutz zu schützen. Darüber hinaus wird bei solch einer Filteranordnung ein Eintreten von aus dem Gebläse selbst kommenden Partikeln in einen stromabwärts des Gebläses angeordneten Wärmetauscher, dem die Luft von dem Gebläse zugeführt wird, verhindert.

Aus dem Gebläse kommende Partikel können dabei vor allem Kupferpartikel sein, die sich während des Gebläsebetriebs von den Bürsten und dem Kommutator des Gleichstrommotors lösen. Ist dem Wärmetauscher, wie beispielsweise einem Verdampfer, kein Filter vorgeschaltet, werden diese Kupferpartikel dann dem druckseitig des Gebläses angeordneten Wärmetauscher zugeführt, und es kommt an bzw. in dem Verdampfer zu unerwünschten Korrosionserscheinungen, was letztlich zum Versagen des Verdampfers führen kann.

Eine Klimaanlage mit einer Konfiguration, bei der zwischen dem Gebläse und dem Verdampfer ein Filter zwischengeschaltet ist, ist beispielsweise aus DE 202 12 894 U1 bekannt. In dieser Klimaanlage führt, ausgehend von einem Gebläse, der Luftstrom in einen Luftfilter und danach in einen Verdampfer, der Teil eines Kältemittelkreises ist und dazu dient, die Luft bei Bedarf abzukühlen. In Strömungsrichtung hinter dem Verdampfer befindet sich darüber hinaus noch meist ein Heizwärmetauscher, der z. B. mit dem Kühlmittel des Fahrzeugmotors beschickt werden kann und dazu dient, die Luft zu erwärmen, bevor sie in den Fahrzeuginnenraum geleitet wird.

Ist bauraum- oder funktionsbedingt zwischen Gebläse und Verdampfer das Zwischenschalten eines Filters oder Filtermaßnahmen jedoch nicht möglich oder gewünscht, kann, um die oben beschriebene Kontamination des Verdampfers zu verhindern, anstelle eines mit Bürsten arbeitenden Gleichstrommotors ein bürstenloser Gleichstrommotor eingesetzt werden. Dieser ist jedoch im Vergleich zum Gleichstrommotor mit Bürsten in der Regel deutlich teurer.

Die US 2004/0263009 A1 offenbart eine Klimaanlage mit einem Gebläse nach dem Oberbegriff von Anspruch 1.

Daher ist es die Aufgabe der vorliegenden Erfindung, eine Klimaanlage für ein Kraftfahrzeug zu schaffen, bei der ein kostengünstiger mit Bürsten arbeitender Gleichstrommotor eingesetzt werden kann, ohne jedoch einen separaten Filter zwischen dem Lüfter und dem Wärmetauscher vorsehen zu müssen.

Die Aufgabe der vorliegenden Erfindung wird durch eine Klimaanlage für ein Kraftfahrzeug mit den Merkmalen gemäß Anspruch 1 gelöst. Vorteilhafte Weiterbildungen der vorliegenden Erfindung sind in den Unteransprüchen definiert.

Erfindungsgemäß wird eine Klimaanlage, insbesondere für ein Kraftfahrzeug, vorgesehen, welche ein Luftführungsgehäuse aufweist, in welchem zumindest ein Gebläse stromaufwärts von zumindest einem Wärmetauscher angeordnet ist, wobei das Gebläse zum Antrieb einen mit zumindest einer Bürste und einem Kommutator versehenen Gleichstrommotor aufweist, und wobei ein Kühlluftstrom zum Kühlen des Gleichstrommotors von einem das Gebläse durchströmenden Hauptluftstrom abgezweigt wird, wobei in dem zumindest einen Gebläse stromabwärts der zumindest einen Bürste des Gleichstrommotors zumindest ein Filter zum Filtern von Abrieb der zumindest einen Bürste und des Kommutators aus dem den Gleichstrommotor durchfließenden Kühlluftstrom angeordnet ist. Dadurch wird erreicht, dass der aus dem Gebläse austretende Hauptluftstrom frei von Partikeln von in dem Gleichstrommotor entstehendem Abrieb ist. Die Anordnung des Gebläses unmittelbar stromaufwärts des Wärmetauschers bezieht sich hierbei auf eine Anordnung ohne weitere dazwischen liegende Zusatzelemente, insbesondere ohne das Zwischenschalten eines separaten Filterelements. Die erfindungsgemäße Konfiguration, welche einen kostengünstigen mit Bürsten arbeiteten Gleichstrommotor einsetzt, ist daher besonders platzsparend. Für bestimmte Bauraumerfordernisse ist dies ein erheblicher Vorteil. Von Vorteil ist darüber hinaus, dass trotz Einsatz des vergleichsweise kostengünstigeren Gleichstrommotors mit Bürsten dessen Abrieb sowie am Kommutator entstehender Abrieb nicht mit dem Kühlluftstrom in den aus dem Gebläse austretenden Hauptluftstrom gelangt und somit der stromabwärts des Gebläses angeordnete Wärmetauscher, wie beispielsweise ein Verdampfer der Klimaanlage, nicht durch diesen Abrieb kontaminiert und somit geschädigt werden kann.

Durch Vorsehen des zumindest einen Filters stromabwärts der Bürsten direkt in der Gebläseanordnung können effektiv und im Hinblick auf die Gesamtklimaanlagenanordnung bauraumsparend insbesondere Partikel, die aus dem Abrieb der Bürsten und des Kommutators resultieren, abgefangen werden bzw. aus dem Luftstrom, der nach Verlassen der Lüfteranordnung dem Wärmetauscher zugeführt wird, gefiltert werden.

Gemäß einer weiteren bevorzugten Ausführungsform ist das Filtermaterial des zumindest einen Filters ein Standardfiltermaterial oder ein Filtermaterial, welches nur zum Filtern von Kupferpartikeln ausgebildet ist.

Gemäß noch einer weiteren bevorzugten Ausführungsform wird der Kühlluftstrom, der auf einer Saugseite des Gebläses von einem Hauptluftstrom abgezweigt wird, durch einen Kühlkanal zur Kühlung des Gleichstrommotors durch diesen hindurch geleitet.

Gemäß noch einer weiteren bevorzugten Ausführungsform ist der zumindest eine Filter zum Filtern des Abriebs der zumindest einen Bürste und des Kommutators in dem Kühlkanal und/oder in einer Laufradnabe angeordnet. Hierdurch kann auf ein zusätzliches separates Filterelement zwischen Lüfter und Wärmetauscher verzichtet werden. Besonders effektiv ist dabei das Vorsehen von sowohl einem Filter in der Laufradnabe (bei offener Ausführung der Nabe) als auch einem weiteren Filter im Kühlkanal, da hierdurch alle Partikel, die in dem Gleichstrommotor durch Bürsten- und Kommutatorabrieb entstehen, aus dem aus dem Lüfter austretenden Luftstrom heraus gefiltert werden.

Vorzugsweise ist ein Abschnitt des Kühlkanals stromabwärts der zumindest einen Bürste als Abscheider ausgebildet. Die Ausbildung des Abschnitts des Kühlkanals als Abscheider kann zusätzlich zu dem zumindest einen Filter zur Reinigung der durch den Gleichstrommotor strömenden Kühlluft vorgesehen sein.

Darüber hinaus ist es vorteilhaft, wenn der als Abscheider ausgeführte Abschnitt des Kühlkanals an einem Luftaustritt angeordnet ist.

Gemäß einer weiteren Ausführungsform sind Kommutator und die zumindest eine Bürste des Gleichstrommotors durch eine Abdeckung gekapselt. Durch Kapseln des Kommutators und der Bürsten wird der Abrieb der Bürsten durch die Abdeckung zurückgehalten und kann somit nicht in den Luftstrom gelangen, der dem Wärmetauscher zugeführt wird.

Gemäß noch einer weiteren Ausführungsform wird der Kühlluftstrom an dem Luftaustritt über einen Ableitungskanal in den Bereich einer Instrumententafel, des Motorraums oder eines Radkastens des Kraftfahrzeugs geleitet. In dieser Ausführungsform wird der Kühlluftstrom druckseitig des Gebläses anstatt dem Hauptluftstrom, von dem der Kühlluftstrom vor Eintritt in den Gleichstrommotor abgezweigt wurde, wieder zugeleitet zu werden, von diesem getrennt gehalten und der Instrumententafel des Kraftfahrzeugs zugleitet, wo er dann beispielsweise über einen Filter in den Fahrzeuginnenraum oder direkt in den Motorraum oder einen Radkasten ausgeblasen werden kann.

Alternativ kann der aus dem Gleichstrommotor bzw. aus dem Gebläse austretende Kühlluftstrom in dem Luftführungsgehäuse auch über einen Bypass an dem zumindest einen Wärmetauscher vorbeigeieitet werden, um beispielsweise einem Verteilerkasten hinter bzw. stromabwärts des Wärmetauschers zugeführt zu werden. So wird ebenfalls auf einfache Weise vermieden, dass der Abrieb der Bürsten und des Kommutators des Gleichstrommotors in den Luftstrom, der den Wärmetauscher passiert gelangt und diesen kontaminiert.

Im Folgenden wird die Erfindung anhand eines Ausführungsbelspiels unter Bezugnahme auf die Zeichnung detailliert erläutert. In der Zeichnung zeigen:
Fig. 1 eine schematische Schnittansicht eines Gebläses gemäß der Erfindung;
Fig. 2 eine schematische Schnittansicht eines Gebläses, das kein Ausführungsbeispiel gemäß der Erfindung ist.
Fig. 3 eine schematische Schnittansicht eines Abschnitts eines Gleichstrommotors, der kein Ausführungsbeispiel gemäß der Erfindung ist.
Fig. 4 eine schematische Schnittansicht eines Gebläses, das kein Ausführungsbeispiel gemäß der Erfindung ist, und
Fig. 5 eine schematische Schnittansicht eines Gebläses, das kein Ausführungsbeispiel gemäß der Erfindung ist.

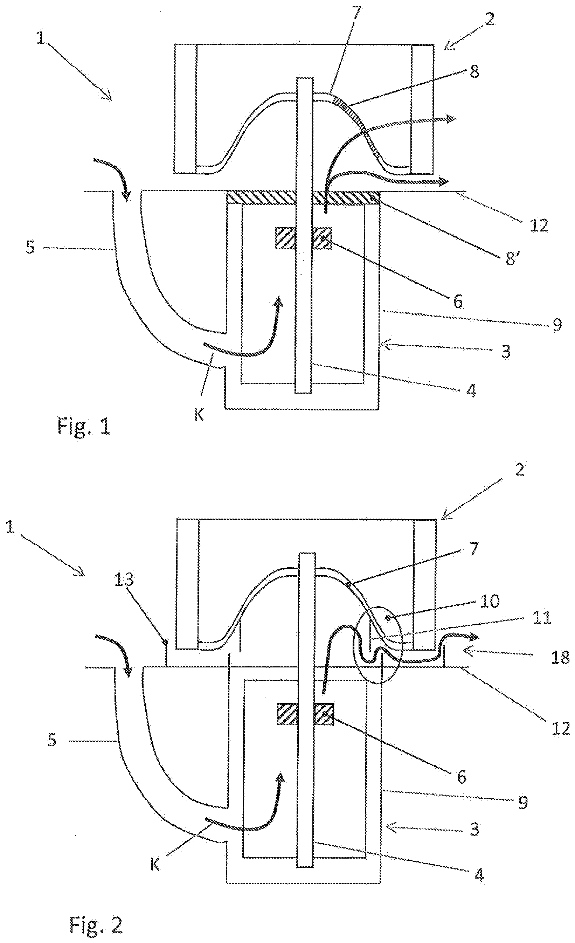

Fig. 1 zeigt eine schematische Schnittansicht eines Gebläses 1 gemäß der Erfindung. Das Gebläse 1 ist in einem hier nicht dargestellten Luftführungsgehäuse der Klimaanlage unmittelbar vor bzw. stromaufwärts eines ebenfalls hier nicht dargestellten Verdampfers angeordnet, wobei zwischen dem Gebläse 1 und dem Verdampfer kein separates Filterelement angeordnet ist. Ein Lüfterrad 2 des Gebläses 1 ist mit dem Gleichstrommotor 3 über eine einen Kommutator aufweisende Motorachse 4 des Gleichstrommotors 3 verbunden. An der Motorachse 4 sind Bürsten 6 angeordnet, die als Schleifkontakte auf dem Kommutator dienen. Von einem auf der Druckseite des Gebläses 1 in dieses eintretenden Hauptluftstrom wird über einen Kühlkanal 5 ein von dem Luftstrom abgezweigter Kühlluftstrom K in den Gleichstrommotor 3 eingeleitet bzw. durch den Gleichstrommotor 3 zu dessen Kühlung hindurch geleitet. Stromabwärts der Bürsten 6 ist in einer Lüfterradnabe 7 an einem Abschnitt davon ein Filter 8 befestigt, der den aus dem Gleichstrommotor 2 kommenden Kühlluftstrom K filtert bzw. den darin enthaltenen Abrieb aus Bürsten 6 und Kommutator 14 aus dem Kühlluftstrom K trennt, bevor der Kühlluftstrom K auf der Druckseite des Gebläses 2 wieder dem Hauptluftstrom, der dem Verdampfer zugeführt wird, zusammengeführt wird. Um einen Anteil des Kühlluftstroms K, der nicht durch das Lüfterrad 2 passiert, ebenfalls von Kupferpartikel oder dergleichen zu reinigen, ist ein weiterer Filter 8' auf dem Gehäuse 9 des Gleichstrommotors 3 befestigt.

Fig. 2 zeigt eine schematische Schnittansicht eines nicht zur Erfindung gehörenden Gebläses. In dieser Ausführungsform sind im Gegensatz zu der in Fig. 1 dargestellten Ausführungsform keine Filter vorgesehen, sondern der Kühlkanal 5 ist stromabwärts der Bürsten 6 als Abscheider 10 ausgebildet. Hierzu ist an der geschlossenen Lüfterradnabe 7 des Lüfterrads 2 ein davon abragendes Abscheiderelement 11 an das Lüfterrad 2 bzw. an einen Abschnitt der Lüfterradnabe 7 angespritzt. Zusammen mit einem an einem Motorhalter 12 angebrachten motorseitigen Ring 13 bildet das Abscheiderelement 11 zusammen mit dem Ring 13 eine Art Labyrinthdichtung, die die an dem Abseheiderelement 11 aus dem Kühlluftstrom K abgeschiedenen Partikel an einem Luftaustritt 18 des Kühllutftstroms K aus dem Lüfter 1 davor bewahren, mit dem Kühlluftstrom K in den Hauptluftstrom, der dem Verdampfer zugeführt wird, zu gelangen.

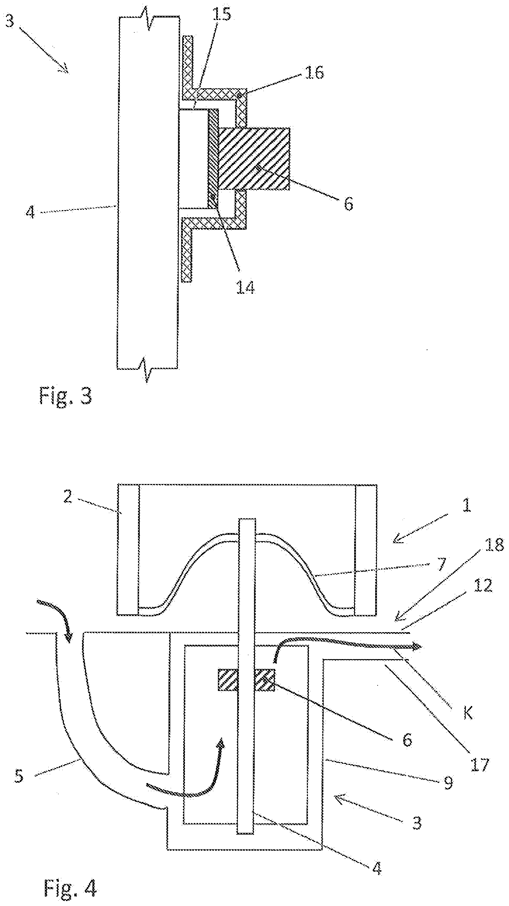

Fig. 3 ist eine schematische Schnittansicht eines Abschnitts eines nicht zur Erfindung gehörenden Elektromotors. Wie hier erkennbar ist, ist der Kommutator 14 über einen Träger 15 an der Motorachse 4 angeordnet. Auf der Seite des Kommutators 14, welche gegenüberliegend zu der Seite ist, welche mit dem Träger 15 verbunden ist, sind die Bürsten 6 an dem Kommutator 14 angeordnet. Sowohl der Kommutator 14 als auch die Bürsten 6 sind durch eine umlaufende - Abdeckung 16 gekapselt, so dass Abrieb der Bürsten 6 und des Kommutators 14 im Inneren der Abdeckung 16 gehalten wird und nicht in den Kühlluftstrom K gelangen kann, der dem dem Verdampfer zuzuführenden Hauptluftstrom zugeleitet wird.

Fig. 4 ist eine schematische Schnittansicht eines nicht zur Erfindung gehörenden Gebläses. Im Gegensatz zu den in Fig. 1 bis Fig. 2 beschriebenen Ausführungsformen wird der Kühlluftstrom K, der den Gleichstrommotor 3 verlässt, nicht von Abriebpartikeln der Bürsten 6 und des Kommutators 14 befreit, sondern der Kühlluftstrom K wird beim Verlassen des Gleichstrommotors 3 nicht in den Hauptluftstrom, der dem Verdampfer zugeführt wird, zurückgeführt, sondern wird über einen getrennten Ableitungskanal 17 an dem Verdampfer vorbeigeileitet. Es besteht dabei entweder die Möglichkeit, den Kühlluftstrom K über den Ableitungskanal 17 der Instrumententafel, dem Motorraum oder einem Radkasten des Kraftfahrzeugs zuzuleiten, über welche der die Partikel enthaltende Kühlluftstrom K dann beispielsweise über einen weiteren Filter (hier nicht dargestellt) ausgeblasen werden kann, falls saugseitig des Gebläses 1 nicht bereits ein Filter vorgesehen ist. Andererseits kann der Ableitungskanal 17 jedoch auch hinter dem Verdampfer bzw, weiteren Wärmetauschern in einen Verteilerkasten der Klimaanlage geleitet werden. In beiden Fällen gelangen die im Kühlluftstrom enthaltenen Partikel nicht in den Verdampfer oder weitere Wärmetauscher, so dass diese vor Korrosionsschäden bewahrt werden und eine längere Lebensdauer aufweisen können.

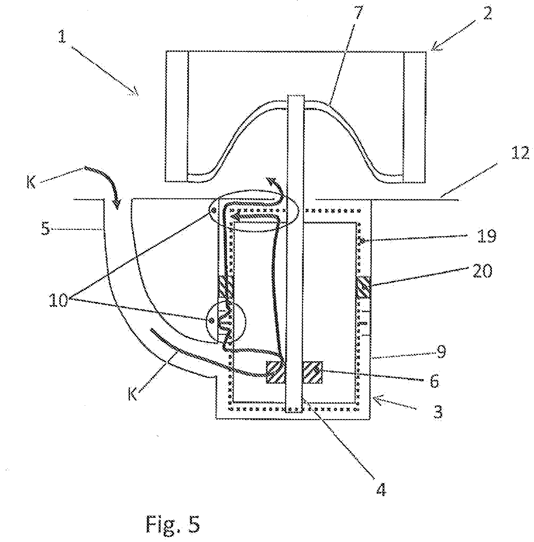

Fig. 5 ist eine schematische Schnittansicht eines nicht zur Erfindung gehörenden Gebläses. Im Gegensatz zu der in Fig. 2 dargestellten Ausführungsform, bei welcher der Kühlkanal 5 stromabwärts der Bürsten 6 als Abscheider 10 ausgebildet ist, ist hier der Motorhalter 12 als Abscheider 10 ausgebildet. Es können auch Bestandteile der Motorentkopplung, wie beispielsweise ein Entkopplungsadapter 19 als Abscheider ausgeführt werden, so dass die Kupferpartikel nicht über die Gebläseströmung zum Verdampfer gelangen können. Der Abscheider 10 kann, je nach Kühlluftführung im Motor, im Bereich zwischen Motor und Motorhalter angebracht werden und/oder anstelle des Filters 8 in Fig. 1 direkt oberhalb des Motors. Dies ist besonders im Hinblick auf Motoren mit unten liegenden Bürsten 6, wie hier dargestellt, vorteilhaft, da hier, je nach Führung des Kühlluftstroms K im Motor der Raum zwischen Motorhalter 12 und Motor zum Abscheiden der Partikel genutzt und so auf zusätzliche Filter verzichtet werden kann.
Insgesamt betrachtet kann auf konstruktiv einfache und daher kostengünstige Art und Weise eine Klimaanlage geschaffen werden, bei der zwischen Gebläse und Wärmetauscher kein zusätzliches separates Filterelement vorgesehen werden muss. Gleichzeitig ist jedoch auch der kostengünstige, mit Bürsten arbeitende Gleichstrommotor zum Antrieb des Gebläses verwendbar.

### Bezugszeichenliste

- 1: Gebläse
- 2: Lüfterrad
- 3: Gleichstrommotor
- 4: Motorachse
- 5: Kühlkanal
- 6: Bürsten
- 7: Lüfterradnabe
- 8, 8': Filter
- 9: Gehäuse
- 10: Abscheider
- 11: Abscheiderelement
- 12: Motorhalter
- 13: Ring
- 14: Kommutator
- 15: Träger
- 16: Abdeckung
- 17: Ableitungskanal
- 18: Luftaustritt
- 19: Entkopplungsadapter
- 20: Entkopplungselemente
- K: Kühlluftstrom

## Patentansprüche

1. Klimaanlage, insbesondere für ein Kraftfahrzeug, welche ein Luftführungsgehäuse aufweist, in welchem zumindest ein Gebläse (1) stromaufwärts von zumindest einem Wärmetauscher angeordnet ist, wobei das Gebläse (1) zum Antrieb einen mit zumindest einer Bürste (6) und einem Kommutator (14) versehenen Gleichstrommotor (3) aufweist, und wobei ein Kühlluftstrom (K) zum Kühlen des Gleichstrommotors (3) von einem das Gebläse (1) durchströmenden Hauptluftstrom abgezweigt wird, **dadurch gekennzeichnet, dass** in dem zumindest einen Gebläse (1) stromabwärts der zumindest einen Bürste (6) des Gleichstrommotors (3) zumindest ein Filter (8, 8') zum Filtern des Abriebs der zumindest einen Bürste (6) und des Kommutators (14) aus dem den Gleichstrommotor (3) durchfließenden Kühlluftstrom (K) angeordnet ist.

2. Klimaanlage nach Anspruch 1, **dadurch gekennzeichnet, dass** ein Filtermaterial des zumindest einen Filters (8, 8') ein Standardfiltermaterial oder ein Filtermaterial ist, welches nur zum Filtern von Kupferpartikeln ausgebildet ist.

3. Klimaanlage nach Anspruch 1 oder 2, **dadurch gekennzeichnet, dass** der Kühlluftstrom (K), der auf einer Saugseite des Gebläses (1) von einem Hauptluftstrom abgezweigt wird, durch einen Kühlkanal (5) zur Kühlung des Gleichstrommotors (3) durch diesen hindurch geleitet wird.

4. Klimaanlage nach einem der Ansprüche 1 bis 3, **dadurch gekennzeichnet, dass** der zumindest eine Filter (8, 8') zum Filtern des Abriebs der zumindest einen Bürste (6) und des Kommutators (14) in dem Kühlkanal (5) und/oder in einer Laufradnabe (7) angeordnet ist.

5. Klimaanlage nach einem der Ansprüche 1 bis 4, **dadurch gekennzeichnet, dass** ein Abschnitt des Kühlkanals (5) stromabwärts der zumindest einen Bürste (6) als Abscheider (10) ausgebildet ist

6. Klimaanlage nach Anspruch 5, **dadurch gekennzeichnet, dass** der als Abscheider (10) ausgeführte Abschnitt des Kühlkanals (5) an einem Luftaustritt (18) angeordnet ist.

7. Klimaanlage nach einem der Ansprüche 1 bis 6, **dadurch gekennzeichnet, dass** der Kommutator (14) und die zumindest eine Bürste (6) durch eine Abdeckung (16) gekapselt sind.

8. Klimaanlage nach Anspruch 6 oder 7, **dadurch gekennzeichnet, dass** der Kühlluftstrom (K) an dem Luftaustritt (18) über einen Ableitungskanal (17) in einen Bereich einer Instrumententafel, eines Motorraums oder eines Radkastens des Kraftfahrzeugs geleitet wird.

9. Klimaanlage nach Anspruch 6 oder 7, **dadurch gekennzeichnet, dass** der aus dem Luftaustritt (18) austretende Kühlluftstrom (K) in dem Luftführungsgehäuse über einen Bypass an dem zumindest einen Wärmetauscher vorbeigeleitet wird.

## Claims

1. An air-conditioning system, in particular for a motor vehicle, having an air guide housing in which at least one fan (1) is arranged upstream of at least one heat exchanger, wherein the fan (1) has one direct current motor (3) for propulsion, provided with at least one brush (6) and one commutator (14), and wherein a cooling air flow (K) for cooling the direct current motor (3) is branched off from a main air flow flowing through the fan (1), **characterised in that** at least one filter (8, 8') for filtering the abrasion of the at least one brush (6) and of the commutator (14) out of the cooling air flow (K) flowing through the direct current motor (3) is arranged in the at least one fan (1) downstream of the at least one brush (6) of the direct current motor (3).

2. The air-conditioning system according to claim 1, **characterised in that** a filter material of the at least one filter (8, 8') is a standard filter material or a filter material which is only formed for the filtration of copper particles.

3. The air-conditioning system according to claim 1 or 2, **characterised in that** the cooling air flow (K), which is branched off from a main air flow on the suction side of the fan (1), is directed through a cooling channel (5) and through the direct current motor (3) in order to cool it.

4. The air-conditioning system according to one of claims 1 to 3, **characterised in that** the at least one filter (8, 8') for filtering the abrasion of the at least one brush (6) and the commutator (14) is arranged in the cooling channel (5) and/or in an impeller hub (7).

5. The air-conditioning system according to one of claims 1 to 4, **characterised in that** a section of the cooling channel (5) downstream of the at least one brush (6) is formed as a separator (10).

6. The air-conditioning system according to claim 5, **characterised in that** the section of the cooling channel (5) which is implemented as a separator (10) is arranged at an air outlet (18).

7. The air-conditioning system according to one of claims 1 to 6, **characterised in that** the commutator (14) and the at least one brush (6) are encapsulated by a cover (16).

8. The air-conditioning system according to claim 6 or 7, **characterised in that** the cooling air flow (K) at the air outlet (18) is directed into an area of a dashboard, an engine compartment or a wheelhouse of the motor vehicle via a discharge channel (17).

9. The air-conditioning system according to claim 6 or 7, **characterised in that** the cooling air flow (K) exiting the air outlet (18) is guided past the at least one heat exchanger via a bypass in the air guide housing.

## Revendications

1. Système de climatisation, en particulier pour un véhicule automobile, qui présente un carter de guidage d'air dans lequel au moins un pulseur (1) est disposé en amont au moins d'un échangeur de chaleur, où le pulseur (1) présente, pour l'entraînement, un moteur à courant continu (3) doté au moins d'un balai (6) et d'un commutateur (14), et où un flux d'air froid (K) servant au refroidissement du moteur à courant continu (3) est dévié à partir d'un flux d'air principal traversant le pulseur (1), **caractérisé en ce qu'**au moins un filtre (8, 8'), servant à la filtration de l'abrasion du balai (6) au moins au nombre de un et du commutateur (14) est disposé dans le pulseur (1) au moins au nombre de un, en aval du balai (6) au moins au nombre de un du moteur à courant continu (3), ladite abrasion provenant du flux d'air froid (K) traversant le moteur à courant continu (3).

2. Système de climatisation selon la revendication 1, **caractérisé en ce qu'**un matériau de filtration du filtre (8, 8') au moins au nombre de un est un matériau de filtration standard ou un matériau de filtration qui est conçu seulement pour la filtration de particules de cuivre.

3. Système de climatisation selon la revendication 1 ou 2, **caractérisé en ce que** le flux d'air froid (K), qui est dévié, à partir d'un flux d'air principal, sur un côté aspiration du pulseur (1), est dirigé à travers un conduit de refroidissement (5) servant au refroidissement du moteur à courant continu (3), ledit flux d'air froid traversant ledit moteur à courant continu.

4. Système de climatisation selon l'une quelconque des revendications 1 à 3, **caractérisé en ce que** le filtre (8, 8') au moins au nombre de un est disposé dans le conduit de refroidissement (5) et / ou dans un moyeu de rotor (7), ledit filtre servant à la filtration de l'abrasion du balai (6) au moins au nombre de un et du commutateur (14).

5. Système de climatisation selon l'une quelconque des revendications 1 à 4, **caractérisé en ce qu'**une partie du conduit de refroidissement (5) est configurée, en aval du balai (6) au moins au nombre de un, comme un séparateur (10).

6. Système de climatisation selon la revendication 5, **caractérisé en ce que** la partie du conduit de refroidissement (5), configurée comme un séparateur (10), est disposée au niveau d'une sortie d'air (18).

7. Système de climatisation selon l'une quelconque des revendications 1 à 6, **caractérisé en ce que** le commutateur (14) et le balai (6) au moins au nombre de un sont encapsulés par un couvercle (16).

8. Système de climatisation selon la revendication 6 ou 7, **caractérisé en ce que** le flux d'air froid (K) est dirigé, au niveau de la sortie d'air (18), via un conduit d'évacuation (17), dans une zone d'un tableau de bord, d'un compartiment moteur ou d'un passage de roue du véhicule automobile.

9. Système de climatisation selon la revendication 6 ou 7, **caractérisé en ce que** le flux d'air froid (K) sortant par la sortie d'air (18) est dirigé, dans le carter de guidage d'air, en passant devant l'échangeur de chaleur au moins au nombre de un, via une dérivation.
